# EUROPEAN PATENT APPLICATION

(11) **EP 0 796 014 A1**
(43) Date of publication of application: **17.09.1997**
(21) Application number: 95935581.9
(22) Date of filing: 27.10.1995
(51) Int. Cl.: H04N 7/16, H04N 7/173

(54) **BIDIRECTIONAL INFORMATION SYSTEM AND DEVICE**

(30) Priority: 27.10.1994 JP 263353/94
(71) Applicant: Nakano, Keizo, Yokohama-shi, Kanagawa-ken 245 (JP)
(72) Inventor: Nakano, Keizo, Yokohama-shi, Kanagawa-ken 245 (JP)
(74) Representative: Molyneaux, Martyn William
(86) International application number: JP9502213
(87) International publication number: WO9613937

(57) **Abstract**

In an interactive still picture information service system between an information provider and a user, communication data is displayed without increasing the burden on a still picture broadcast.

An information provider apparatus transmits a natural still picture for input and output to a user apparatus on a still picture broadcast, and data transmitted and received between the information provider apparatus and the user apparatus is transmitted via a telephone line. At the user apparatus, the received still picture and data are superimposed and displayed on a display unit.

## Description

### BACKGROUND OF THE INVENTION

### FIELD OF THE INVENTION

The present invention relates, in general, to interactive value added information services, which are offered by television broadcasting such as terrestrial wave broadcasting, CATV, or satellite broadcasting, etc. and telephone, and in particular to a system and an apparatus for providing an interactive information service by combining picture media for television such as still picture television broadcasting, still picture video tape, still picture video disk, etc. with a telephone.

### BACKGROUND ART

In the information-oriented society of today, various transmitting means are used to transmit electrical and electronic information such as sound, picture, text data, binary data, etc. Of such electrical and electronic information, low quality sound, monochrome still picture at low speed, character data at low speed, and binary data at low speed are transmitted by public line as electric signals, and monochrome still picture at high speed, character data at high speed and binary data at high speed are transmitted by ISDN (Integrated Services Digital Network) line as an electric signal. High quality sound and moving picture are transmitted by terrestrial wave broadcasting, satellite broadcasting or CATV as a modulated radio wave or by optical fiber as modulated light.

In the present information-centered era, attention is now focused on the interactive information systems. The interactive information system is a system, in which information is selectively received and positively utilized by general public, who have been merely receivers of the one-way information sent to them.

As the interactive information system currently used, there are answering system using automatic audio response system via public line, videotex system represented by CAPTAIN (Character And Pattern Telephone Access Information Network) using still picture, and VRS (Video Response System) using moving picture via dedicated line.

Of these interactive information systems, the answering system is disadvantageous in that sufficient information cannot be obtained because it depends upon audio information only and that input and output data cannot be visually confirmed.

The VIDEOTEX system has drawbacks in that there is limitation in the contents to be displayed because texts and pictures are displayed by using character codes, and the picture information using character codes can provide less amount of information then a natural picture.

The VRS system has no limitation in the contents of display because natural moving picture can be used, while communication cost is expensive because wide band dedicated line must be used.

On the other hand, various information services such as television shopping, application or subscription, weather forecast, traffic information, etc. are offered in the currently used television system, although these are not interactive. Most of the picture information needed in these information services are the still picture information, and moving picture information is needed in very rare cases. Thus, in the current television system offering these information services, still picture is broadcast as moving picture. Specifically, by transmitting several hundreds to several thousands of the same picture, a still picture is displayed on a television set. Therefore, the transmitting cost of the still pictures is very expensive, and an interactive information service for transmitting still pictures to match the demand of the users are not currently available.

For example, television shopping is one of the information services using pictures. However, in the television shopping available in the past, only the one-way product information, transmitted by the broadcasting station is utilized, and interactive information service is not practically available, in which the desired picture from product information is displayed on the television set according to the intention of the users and the users carry out shopping based on the contents of the display.

Meanwhile, television picture is composed of frame units. In the NTSC system adopted in Japan, the picture is sent at a rate of 30 frames per second.

In one frame, two field pictures comprising of different picture components are superimposed by interlace scanning.

Each of the frame pictures is a complete natural picture, while the field picture is not a complete natural picture because the information therein is only one-half of that of the natural picture. However, when compared with the picture based on character codes, it may be referred as a natural picture, which provides some satisfaction.

As a still picture broadcast system based on this principle, there is a system called " time-division still picture broadcast system".

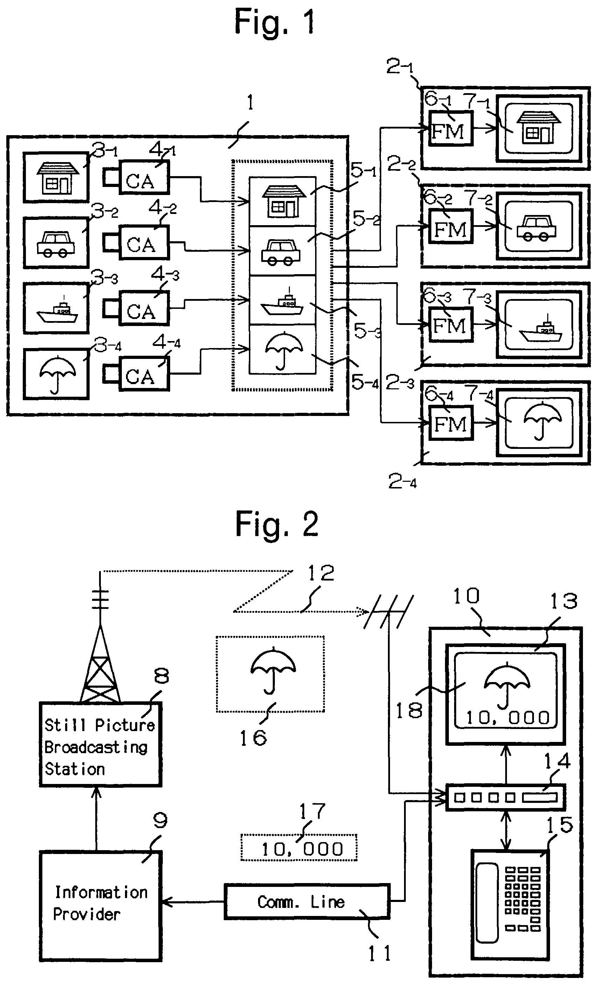

In the still picture broadcast system shown in Fig. 1, still pictures 3-1, 3-2, 3-3, 3-4,....... are photographed at first by independent television cameras 4-1,4-2, 4-3, 4-4,..... at a still picture broadcasting station 1. Next, these still picures are composed to television signals comprising of frames 5-1, 5-2, 5-3, 5-4, ......., and these are transmitted to still picture receiving devices 2-1, 2-2, 2-3, 2-4, .....

Upon receipt of the television signals, necessary frames are stored at first to frame memories 6-1, 6-2, 6-3, 6-4,..... at the still picture receiving devices. Next, the stored frames are repeatedly read out from the frame memories and are displayed on display units 7-1, 7-2, 7-3, 7-4, ...... as still pictures.

Selection of the necessary frames and recording them to the frame memories are carried out by the procedure such as an insertion of a frame identification signal to horizontal scanning line during vertical retrace interval of each frame.

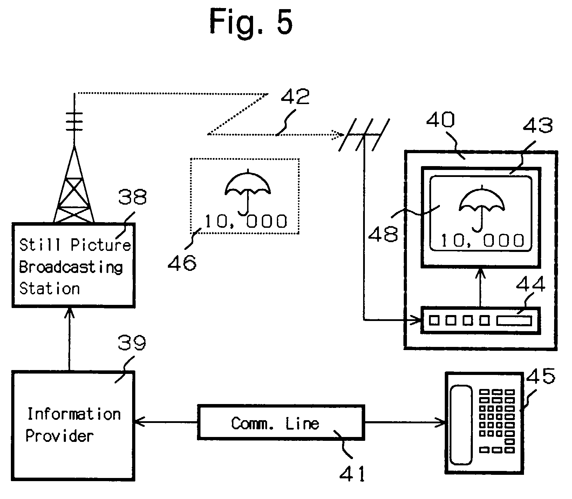

Up to now, an interactive still picture information service system has been proposed, in which still picture information service is requested by an adequate means such as public line and still picture information service is offered by the "time-division still picture broadcast system" to such request. Fig. 5 shows a general outline of the system.

This system comprises a still picture broadcasting station apparatus 38 for broadcasting a still picture by the time-division still picture broadcast system, an information provider apparatus 39, a user apparatus 40, and a data communication device such as a telephone set 45. Terrestrial broadcasting wave 42 or satellite broadcasting wave or CATV radiowave are used to connect between the still picture broadcating station apparatus 38 and the user apparatus 40, and a communication line 41 such as public line or CATV line is used to connect the telephone set 45 with the information provider apparatus 39. A communication line such as public line or dedicated line is used to connect the information provider apparatus 39 with the still picture broadcasting station apparatus 38.

The user apparatus 40 comprises a set-top box 44 for receiving a still picture, a display unit 43 and a data communication device such as a telephone set 45. To the set-top box 44 for receiving the still picture, a television antenna for receiving still picture broadcasting, a television antenna for receiving satellite broadcasting, or a coaxial cable for CATV are connected. The set-top box 44 for receiving the still picture is connected to a display unit 43 such as a television set. The telephone set 45 is connected to a communication line 41 such as a public line or CATV line.

In this system, when a user, wishing to receive the information service, calls the information provider system 39 using the telephone set 45 via the communication line 41 such as public line and requests transmission of the desired still picture, the request is transferred to the still picture broadcasting station system 38. As a result, the desired still picture 46 is broadcast, and the desired still picture 48 is displayed on the display unit 43 by the user.

In case commercial dealing such as television shopping is carried out on the information service utilizing a communication line, a great number of data are transmitted and received, and it is necessary to confirm these data. To copy with such a situation, data may be displayed by superimposing. In such a case, a still picture with superimposed data is transmitted each time the data is changed, and this results in a heavier burden on the still picture broadcasting station.

### DISCLOSURE OF THE INVENTION

The present invention provides an interactive information service system using "time-division still picture broadcast system" as information transmitting means and using public line as data communication means, wherein data of the data communication carried out between a user and an information provider is displayed on a television set of the user.

The system according to the present invention comprises an information provider apparatus, a user apparatus, a television wave transmitting path for connecting the information provider apparatus with the user apparatus, and a communication line.

The information provider apparatus comprises a still picture television wave transmitting apparatus for transmitting a natural still picture by time-division still picture broadcast system, and a data communication device for carrying out data communication with the user.

The user apparatus comprises a still picture television receiver for receiving and displaying signals of natural still picture television wave transmitted by the time-division still picture broadcast system and for displaying the data thus transmitted and received, and a data communication device connected to a communication line via the still picture television receiver and used for data communication with the information provider.

Conveniently, the television wave transmitting path may be terrestrial broadcasting wave, satellite broadcasting wave or CATV line. For the communication line, public line, ISDN line or CATV line may be utilized.

The natural still picture is transmitted only once as a rule, while information other than the natural still picture is transmitted and received via the communication line. It is then converted to a character pattern by a character generator incorporated in a still picture television receiver of the user, superimposed with the natural still picture, and it is stored in a frame memory of the user apparatus. Then, the superimposed pictures are repeatedly read out and are displayed on the display unit.

### BRIEF DESCRIPTION OF THE DRAWINGS

Fig. 1 is a block diagram of the time-division still picture broadcast system;
Fig. 2 represents a system block diagram of an embodiment of the present invention;
Fig.3 represents an apparatus block diagram of the embodiment of the present invention;
Fig. 4 is a system block diagram of another embodiment of the present invention; and
Fig. 5 represents a system block diagram of a conventional system.

### BEST MODE FOR CARRYING OUT THE INVENTION

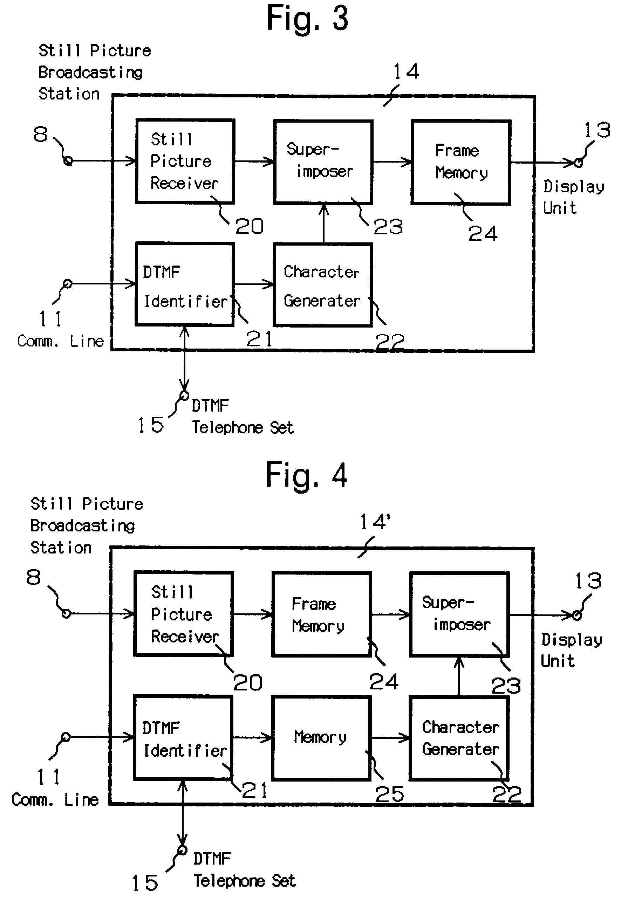

Description will be given now on an embodiment of the present invention in connection with Fig. 2 and Fig. 3.

Fig. 2 represents an embodiment of an interactive still picture information service system of the present invention, and comprises a still picture broadcasting station apparatus 8, an information provider apparatus 9, and a user apparatus 10. Terrestrial broadcasting wave path 12 or satellite broadcasting wave or CATV wave is used to connect between the still picture broadcasting station apparatus 8 and the user apparatus 10, and a communication line 11 such as public line or CATV line is used for connecting between the user apparatus 10 and the information provider apparatus 9. A communication line such as public line or dedicated line is used to connect between the information provider apparatus 9 and the still picture broadcasting station apparatus 8.

The user apparatus 10 comprises a set-top box 14 for receiving still picture, a display unit 13 and a dual-tone telephone set 15. To the set-top box 14 for receiving the still picture, a television antenna for receiving still picture broadcasting, a television antenna for receiving satellite broadcasting or a coaxial cable for CATV are connected, and the set-top box 14 for receiving the still picture is connected to the display unit 13 such as a television set. A communication line 11 such as public line or CATV line is also connected to the set-top box 14 for receiving the still picture, and the dual-tone telephone set15 is connected to the communication line 11 via the set-top box 14 for receiving the still picture.

Fig. 3 represents an arrangement of an embodiment of the set-top box used in the present invention.

Incorporated in the set-top box 14 are a still picture receiver 20 connected to the still picture broadcasting station, a dual-tone identifier (DTMF) 21 connected to the communication line and to a dual-tone telephone set 15, a character generator 22 connected to the dual-tone identifier 21, a picture superimposer 23, to which the still picture receiver 20 and the character generator 22 are connected, and a frame memory 24 connected to the superimposer 23. The display unit 13 is connected to the frame memory 24.

Also, a device for controlling these units is included in the set-top box 14, and a key pad for data input can also be added.

Fig. 4 shows an arrangement of a set-top box of another embodiment used in the present invention.

This set-top box 14' is the same as the set-top box 14 shown in Fig. 3, except that the superimposer 23 and the frame memory 24 are connected in reverse sequence and a memory 25 is placed between the dual-tone identifier 21 and the character generator 22, and detailed description is not given here. The memory 25 may not be provided.

In the following, description will be given on operation of the interactive information service system of the embodiment of the present invention.

In this system, a user, wishing to receive an information service, calls the information provider apparatus 9 by the dual-tone telephone set 15 of the user apparatus 10 via the communication line 11 such as public line.

Upon receipt of the telephone call from the user, the information provider apparatus 9 sends instructions such as request procedure to the user by a voice response system incorporated in it in response to dual-tone signals and receives a request for utilization of the still picture information service from the user.

When the request from the user for utilization of information service is received, the information provider apparatus 9 charges a fee when necessary and transfers the request for the still picture broadcasting from the user to the still picture television broadcasting station. In this case, frame control data such as user identification code, still picture number, etc. for the desired still picture requested by the user are transmitted to the still picture television broadcasting station if necessary.

The still picture television broadcasting station 8 adds the frame control data such as the user identification code, the still picture number, the frame number, etc. to the still picture requested by the user, and it is broadcast only once as a rule by terrestrial broadcasting wave, satellite broadcasting wave or CATV broadcasting wave in accordance with the time-division still picture broadcast system shown in Fig.1 by the still picture television broadcasting station.

Incidentally, the still picture broadcasting is uni-directional because of the nature of the broadcasting, and it cannot be controlled in such manner as to ensure the receiving of the desired still picture by the user. To ensure the receiving of the still picture, a receiving confirmation signal is transmitted from the user apparatus to the information provider. If the receiving confirmation signal is not sent within a given time, the still picture is transmitted again.

The receiving confirmation signal may be automatically transmitted by the user apparatus when data such as the user identification signal or the still picture number has been detected, or it may be inputted, in a simple procedure, as a dual-tone signal by the user according to an instruction displayed on the still picture. As a still more simple procedure, the receiving confirmation signal may be automatically transmitted when the user performs new operation based on the still picture, which should be transmitted.

In such case, if the still picture is broadcast with a certain delay, the user can reliably receive the desired still picture.

If the still picture is broadcast by several times with a certain time interval, more reliable receiving of the picture is ensured.

Further, the still picture television broadcasting station may transmit a broadcasting schedule including selection data such as still picture number, frame number, etc. to the user via the information provider, or the receiving of the picture can be ensured by exchange of still picture receiving control data via the communication line between the information provider apparatus and the user apparatus.

The information provider apparatus 9 sends necessary data such as display data, display control data, etc. to the dual-tone telephone set 15 of the user as dual-tone signal via the communication line 11.

Upon receipt of the still picture television broadcast sent on the time-division still picture broadcast system, the user apparatus 10 selects the frame of the requested still picture by using a frame control signal inserted into the horizontal scanning line during the vertical retrace interval of each frame, stores the selected frame in the frame memory, repeatedly reads out the stored frame from the frame memory, and displays it as a still picture on the display unit 13.

As the data, which the user apparatus 10 compares with the frame control signal when selecting the still picture, the ID code of the set-top box 14, the data inputted by the dual-tone telepohone set 15, or selection data sent from the information provider apparatus 9 via the communication line 11 may be used.

On the still picture receiver 20 of the set-top box 14, the still picture broadcast from the still picture broadcasting station 8 is picked up, while a character pattern is generated by the character generator 22 from the communication data exchanged between the dual-tone telephone set 15 of the user and the information provider apparatus 9 via the communication line 11.

The still picture picked up by the still picture receiver 20 and the character pattern generated by the character generator 22 are stored into the frame memory 24 as superimposed into one picture frame by the superimposer 23. The stored picture frame is repeatedly read out at a rate of 30 times per second from the frame memory, and it is displayed on the display unit 13 as a still picture.

At the same time, the dual-tone signal transmitted and received by the dual-tone telephone set is converted to data signal by the dual-tone identifier,and a character pattern is generated by the character generator based on this data signal. The generated character pattern is superimposed on the still picture by the superimposer 23, recorded on the frame memory and is repeatedly read out.

Description is now given on the case where the present invention is applied for mail order system, which is one of the typical interactive information services. To simplify the explanation, it is assumed in this example that the still picture television broadcasting station also functions as the information provider.

The mail order system utilizing the still picture broadcasting is carried out as follows:
(1) The user calls the information provider apparatus by the dual-tone telephone set connected to the still picture receiver.
(2) The information provider apparatus sends instruction to input the user identification code by a message using a voice response system.
(3) The user inputs the user identification code by dual-tone signal.
(4) The information provider apparatus checks the user identification code. If the identification code is acceptable, hierarchized shopping service menu is broadcast as a still picture.
(5) The user follows hierarchy of the hierarchized shopping menu and finds a product, and inputs the number of the desired product by dual-tone signal.
(6) Upon receipt of the product number, the information provider apparatus broadcasts the still picture for the information such as product catalog by the still picture television broadcasting station apparatus.
(7) The user confirms the product by the broadcast still picture and requests purchase of the product by dual-tone signal.
(8) The purchase request is transferred to the mail order house by an adequate means such as facsimile or data communication using personal computer. Based on the purchase request thus transferred, the mail order house ships the product and collects the bill.

By adding the user identification code or the ID code of the set-top box 14 to the frame identification number, only the user who requested the use can use the still picture.

For the communication between the user and the information provider, communication system using a personal computer or a word-processor combined with modem or a system utilizing modem-telephone can be used in addition to the answering system by the dual-tone telephone set and voice response system.

The services, for which the present invention may be applied are, for example, product purchase or information for products, or various types of application and subscription. In addition, there may be the supply of news, weather information, announcement of time, traffic information, tourist guide information, stock market information, various types of notices, reports, etc., and education information. Further, the invention can be utilized for a game for a plurality of players or for a video conference system with still picture.

The still picture broadcasting station may be integrated with the information provider.

Also, the following procedure may be carried out:
(1) The information provider uses the user identification code and the still picture sequence number as control data. By combining this with the still picture data as a pair, it is sent to the still picture television broadcasting station, and the information provider waits for the signal, which informs the completion of transmission of the still picture.
(2) Upon receipt of the control data and the still picture data from the information provider, the still picture television broadcasting station assigns it to an adequate television picture frame and broadcasts the still picture.
   When the transmission from the still picture broadcasting apparatus has been completed, a transmission completion signal including the control data is sent to the information provider.
(3) When the transmission completion signal from the still picture television broadcasting station has been received, the information provider checks the control data if right or not. Then, the information provider is turned to standby status for receiving the receiving confirmation signal from the user.
(4) The user apparatus receives the control data and the picture data of the still picture for itself by the still picture receiver to which the user identification code has been preset. Upon completion of reception, the still picture receiver sends a dual-tone signal corresponding to the receiving confirmation signal including the control data of the received still picture to the information provider by telephone line and displays the received still picture on the television set.
(5) The information provider detects the receiving confirmation signal sent as dual-tone signal from the user on telephone by the dual-tone signal identifier.In this way, by checking the control data of the still picture included in the receiving confirmation signal, it is possible to know whether the still picture has been correctly received or not. In case it is confirmed that the still picture has not been correctly received by the user or in case there is no response within a given time, the still picture is transmitted once more. In case it is confirmed that the user correctly received the still picture, a voice message is sent to the user on telephone so that the current still picuture should be duly processed, and the information provider waits for input of the dual-tone signal from the user.
(6) In accordance with voice message on telephone, the user inputs the dual-tone signal while watching the still picture on the television set.

Next, brief description will be given on a variation of the above embodiment.

On the embodiments as described above, it is assumed that the user apparatus 10 is directly operated by the user, while it is also possible to place the user apparatus 10 at the information provider apparatus, and the operator can operate it instead of the user. Also, if the request is made orally, the still picture broadcasting program number may not be used. Further, it is also possible that the operation can be carried out by data communication without using the voice response system.

In the user apparatus 10, all or two of the set-top box 14 for receiving the still picture, the display unit 13 and the dual-tone telephone set 15 may be integrated.

To ensure a more reliable communication between the user apparatus 10 and the information provider apparatus 9, a facsimile may be utilized.

Where a still picture broadcasting program is broadcast upon request of the user who requests the still picture broadcasting program use and where a fee should be collected, it is difficult for the broadcasting station which usually does not collect the fee directly to collect the fee.

In such a case, a payment collection service system by a common carrier, a fee collecting system by computer communication enterprise, or a payment collection service system by bank may be utilized. As a more simple procedure, a prepaid card such as magnetic card or IC card may be used.

Instead of the terrestrial wave broadcasting station 8 shown in Figure 2, the still picture television broadcasting station may be a satellite television broadcasting station or a CATV broadcasting station. It is preferable to utilize the CATV broadcasting station because the signal to be broadcast is a plurality of still pictures.

Also, a tape or a disk where still pictures are recorded may be used as the still picture supplying means. In this case, a tape or a disk drive unit is controlled to display the desired still picture.

The still picture to be broadcast is normally transmitted using one frame. In case of the picture with less information, one field, i.e. one-half frame as one picture may be used for each field to transmit the still picture.

Various types of control signals in the above embodiment are transmitted on the scanning line during the vertical retrace interval of the television picture signal. In addition, the audio band for television audio signal may be utilized. In such a case, if it is sent in the main audio band, the signal may be heard by the user, and this is offensive to the ears. To avoid this problem, sub audio band, in particular the sub audio band not used for stereo sound or dual sound can be utilized.

For the control signal, digital data is generally used, while dual-tone signal may also be used.

As the telephone set, in addition to the dual-tone telephone set shown in the figure, pulse dial telephone, modem-telephone, or a combination of personal computer and modem, and a more simple device such as pulse dial telephone using pulse signal may be used. It is preferable to use the dual-tone telephone for practical use.

The communication line 11 may typically be a public telephone line, or where the still picture broadcasting is CATV broadcasting, the CATV line may be utilized.

### INDUSTRIAL APPLICABILITY

The present system is an interactive information service system using telephone set and television set, which are widely propagated in general home, and this means less cost burden for general users.

Since a different picture is transmitted for each frame of the television picture signal, a wide variety of still pictures can be broadcast within a short time. For this reason, an interactive still picture service can be provided to each of many users.

Also, the contents of communication between the user and the information provider can be displayed on the display unit without increasing the burden on the information provider.

## Claims

1. An interactive information communication system, comprising an information provider apparatus, a user apparatus, a television wave transmitting line for connecting the information provider apparatus with the user apparatus and a communication line, whereby:
said information provider apparatus comprises a still picture television wave transmitter for transmitting a natural still picture on time-division still picture broadcast system and a data communication device for carrying out data communication with a user; and
said user apparatus receives said natural still picture transmitted on said time-division still picture broadcast system and superimposes the data transmitted and received via said communication line with said natural still picture to be displayed.

2. An interactive information communication system according to Claim 1, wherein a still picture television broadcasting station transmits broadcasting schedule including selection data such as still picture number, frame number, etc. via an information provider to a user.

3. An interactive information communication system according to Claim 1, wherein control data of said natural still picture transmitted on said time-division still picture broadcast system is sent on scanning line during vertical retrace interval of the television picture signal and is transmitted.

4. An interactive information communication system according to Claim 1, wherein the control data of said natural still picture transmitted on said time-division still picture broadcast system is transmitted on a television audio band signal.

5. An interactive information communication system according to Claim 4, wherein said television audio band is a sub audio band not utilized for stereo sound or dual sound.

6. An interactive information communication system according to Claim 1, wherein the control data of said natural still picture transmitted on said time-division still picture broadcast system is transmitted via said communication line.

7. An interactive information communication system according to Claim 1, wherein the information provider apparatus and the user apparatus exchange the control data of the still picture via the communication line.

8. An interactive information communication system according to Claim 7, wherein the control data of the still picture exchanged via said communication line is a dual-tone signal.

9. An interactive information system transmitting apparatus, comprising a still picture television wave transmitter and an information provider apparatus, whereby:
said still picture television wave transmitter transmits a natural still picture on time-division still picture broadcast system; and
said information provider apparatus carries out data communication with the user.

10. An interactive information system receiving apparatus, comprising a still picture receiver for receiving a natural still picture broadcasting wave and for picking up a still picture;
a frame memory connected to said still picture receiver;
a dual-tone identifier connected to a communication line and having a dual-tone telephone set connected thereto;
a character generator connected to said dual-tone identifier; and
a superimposer connected to said frame memory and said character generator,
whereby:
a display unit is connected to said superimposer.

11. An interactive information system receiving apparatus, comprising a still picture receiver for receiving a natural still picture broadcasting wave and for picking up a still picture;
a dual-tone identifier connected to a communication line and having a dual-tone telephone set connected thereto;
a character generator connected to said dual-tone identifier;
a superimposer connected to said still picture receiver and said character generator; and
a frame memory connected to said superimposer, whereby:
a display unit is connected to said superimposer.
